(19) Europäisches Patentamt
European Patent Office
Office européen des brevets

(11) EP 3 722 331 B1

(12) **EUROPEAN PATENT SPECIFICATION**

(45) Date of publication and mention of the grant of the patent:
**23.08.2023 Bulletin 2023/34**

(21) Application number: **18885908.6**

(22) Date of filing: **30.11.2018**

(51) International Patent Classification (IPC):
***C08C 19/22*** *(2006.01)* ***C08C 19/25*** *(2006.01)*
***C08C 19/38*** *(2006.01)* ***C08C 19/44*** *(2006.01)*
***C08F 136/06*** *(2006.01)* *C08L 9/06 (2006.01)*
*C08L 15/00 (2006.01)* *C08L 9/00 (2006.01)*

(52) Cooperative Patent Classification (CPC):
(C-Sets available)
**C08C 19/44; C08C 19/22; C08C 19/25;**
**C08C 19/38; C08F 136/06** (Cont.)

(86) International application number:
**PCT/JP2018/044222**

(87) International publication number:
**WO 2019/111819 (13.06.2019 Gazette 2019/24)**

# (54) MODIFIED LIQUID DIENE POLYMER

MODIFIZIERTES FLÜSSIGES DIENPOLYMER

POLYMÈRE MODIFIÉ DE DIÈNE LIQUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.12.2017 JP 2017233223**

(43) Date of publication of application:
**14.10.2020 Bulletin 2020/42**

(73) Proprietor: **Kuraray Co., Ltd.**
**Okayama 710-0801 (JP)**

(72) Inventor: **KODA, Daisuke**
**Kamisu-shi**
**Ibaraki 314-0197 (JP)**

(74) Representative: **Müller-Boré & Partner**
**Patentanwälte PartG mbB**
**Friedenheimer Brücke 21**
**80639 München (DE)**

(56) References cited:
**EP-A1- 3 635 016** **WO-A1-2016/180649**
**WO-A1-2016/180649** **JP-A- 2004 197 079**
**JP-A- 2009 191 262** **JP-A- 2015 083 649**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 722 331 B1

(52) Cooperative Patent Classification (CPC): (Cont.)

C-Sets
**C08F 136/06, C08F 4/48;**
**C08L 9/06, C08L 91/00, C08L 9/00, C08L 15/00, C08L 91/06, C08K 3/36, C08K 5/548, C08K 3/22, C08K 5/09, C08K 3/06, C08K 5/31, C08K 5/47, C08K 5/18, C08K 5/40**

## Description

TECHNICAL FIELD

The present invention relates to a modified diene polymer and a method for producing modified diene polymers.

BACKGROUND ART

Fillers such as silica and carbon black are conventionally added to rubber components such as natural rubbers and styrene butadiene rubbers to enhance the mechanical strength. Such rubber compositions are widely used in tire applications and the like which require abrasion resistance and mechanical strength. It has been pointed out that the state of a filler dispersed in a crosslinked product of a filled rubber composition can affect properties (such as, for example, mechanical properties and rolling resistance) of the crosslinked product. Unfortunately, the dispersibility of a filler in a filled rubber composition is sometimes insufficient due to the facts that the affinity between a rubber and a filler is not necessarily high and that filler molecules interact with one another. In such cases, the dispersion state is not often ideal for a crosslinked product to attain enhanced properties.
The filler dispersibility in rubber compositions is enhanced by various approaches using liquid rubbers having a functional group (see, for example, Patent Literatures 1 and 2). WO 2016/180649 A1 discloses the use of silane-modified polybutadienes in rubber mixtures, in particular for improving the rolling resistance of diene rubber tires.
However, there is still room for improvements in properties such as, for example, breaking energy and rolling resistance performance of crosslinked products obtained from such rubber compositions.

CITATION LIST

PATENT LITERATURE

Patent Literature 1: JP-A-2000-344949
Patent Literature 2: JP-A-2013-249359

SUMMARY OF INVENTION

TECHNICAL PROBLEM

The present invention has been made in light of the circumstances discussed above, and provides a modified diene polymer which may be added to a rubber composition together with a filler to allow the filler to be dispersed in a crosslinked product of the composition in a state that is ideal for attaining enhanced properties. The present invention also provides a method for producing such modified diene polymers.

SOLUTION TO PROBLEM

After extensive studies, the present inventors have found that a rubber composition which includes a modified linear diene polymer having a specific amount of a specific functional group only at one end thereof gives a crosslinked product in which a filler is dispersed in an ideal state for properties enhancements. The present invention has been completed based on the finding.
Specifically, the present invention pertains to the following [1] to [4].

[1] A modified linear diene polymer having a functional group of the following formula (1) only at one end thereof, the average number of the functional groups per molecule being 0.8 to 1,

[Chem. 1]

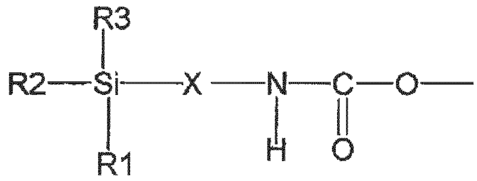

(1)

wherein R1, R2 and R3 are each independently a methoxy group, an ethoxy group, a phenoxy group, a methyl group, an ethyl group or a phenyl group, at least one of R1, R2 and R3 is a methoxy group, an ethoxy group or a phenoxy group, and X is a divalent alkylene group having 1 to 6 carbon atoms.

[2] The modified linear diene polymer described in [1], which has a ratio (Mw/Mn) of weight average molecular weight (Mw) to number average molecular weight (Mn) of 1.0 to 2.0.

[3] A method for producing a modified linear diene polymer described in [1] or [2], comprising:

a step (I) of polymerizing a monomer comprising a conjugated diene in the presence of an organic solvent using a monofunctional anionic polymerization initiator, and terminating the polymerization reaction with an epoxy group-containing compound, thereby preparing a solution including a hydroxyl-modified linear diene polymer having a hydroxyl group only at one end thereof,
a step (II) of removing a catalyst residue derived from the monofunctional anionic polymerization initiator from the solution including the hydroxyl-modified linear diene polymer,
a step (III) of removing the organic solvent from the solution including the hydroxyl-modified linear diene polymer resulting from the step (II), and
a step (IV) of reacting the hydroxyl-modified linear diene polymer with a silane compound represented by the following formula (1'),

[Chem. 2]

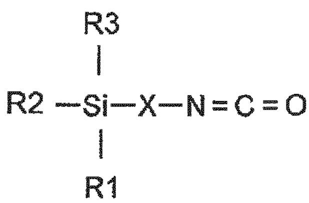

(1')

wherein R1, R2 and R3 are each independently a methoxy group, an ethoxy group, a phenoxy group, a methyl group, an ethyl group or a phenyl group, at least one of R1, R2 and R3 is a methoxy group, an ethoxy group or a phenoxy group, and X is a divalent alkylene group having 1 to 6 carbon atoms.

[4] The method for producing a modified linear diene polymer described in [3], wherein the monofunctional anionic polymerization initiator is an alkylmonolithium.

ADVANTAGEOUS EFFECTS OF INVENTION

The modified diene polymer obtained according to the present invention may be added to a rubber composition together with a filler to allow the filler to be dispersed in a crosslinked product of the composition in a state that is ideal for attaining enhanced properties. Such modified diene polymers may be produced efficiently according to the present invention.

DESCRIPTION OF EMBODIMENTS

[Modified linear diene polymers (A)]

A modified liquid diene polymer of the present invention is a linear polymer and has a functional group represented by the formula (1) below only at one of the two ends (at one end) thereof, the average number of the functional

groups being 0.8 to 1 per molecule (hereinafter, this polymer is also written as the modified linear diene polymer (A)). By adding the modified linear diene polymer (A) to, for example, a rubber composition containing a filler, the filler is allowed to be dispersed in a state that is ideal for a crosslinked product of the rubber composition to attain enhanced properties.

An unmodified linear diene polymer (A'), which is a raw material for the modified linear diene polymer (A), includes conjugated diene units as monomer units constituting the polymer. Examples of the conjugated dienes include butadiene, isoprene; and conjugated dienes (a1) other than butadiene and isoprene, such as 2,3-dimethylbutadiene, 2-phenylbutadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene and chloroprene. The conjugated diene units in the unmodified linear diene polymer (A') include monomer units derived from butadiene and/or isoprene.

The total content of butadiene units and isoprene units is 60 to 100 mass%, and preferably 70 to 100 mass% relative to all the monomer units forming the linear diene polymer (A') .

In addition to the butadiene units and the isoprene units, the linear diene polymer (A') may include additional monomer units such as units from the aforementioned conjugated dienes (a1) other than butadiene and isoprene, and units from aromatic vinyl compounds (a2).

Examples of the aromatic vinyl compounds (a2) include styrene, α-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl)styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene and divinylbenzene. Of these aromatic vinyl compounds, styrene, α-methylstyrene and 4-methylstyrene are preferable.

In the unmodified linear diene polymer (A'), the content of the additional monomer units other than the butadiene and isoprene units is not more than 40 mass%, and still preferably not more than 30 mass%. When, for example, the content of vinyl aromatic compound (a2) units is within the above range, crosslinked products obtained from a rubber composition tend to be enhanced in rolling resistance performance.

The modified linear diene polymer (A) of the present invention is a polymer obtained by introducing a functional group of the formula (1) below at only one of the ends of the unmodified linear diene polymer (A'). By virtue of such a functional group being present at one end of the modified linear diene polymer (A), a rubber composition including the modified linear diene polymer (A) gives crosslinked products with enhanced properties. When, for example, the rubber composition further includes a solid rubber (B) and a filler (C) which are described later, enhancements may be achieved in, for example, breaking energy and rolling resistance performance.

[Chem. 3]

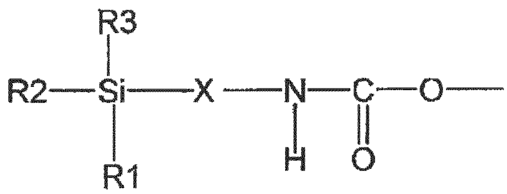

(1)

In the formula (1), R1, R2 and R3 each independently denote a methoxy group, an ethoxy group, a phenoxy group, a methyl group, an ethyl group or a phenyl group with the proviso that at least one of R1, R2 and R3 is a methoxy group, an ethoxy group or a phenoxy group. X is a divalent alkylene group having 1 to 6 carbon atoms. Examples of the divalent alkylene groups having 1 to 6 carbon atoms include methylene group, ethylene group, propylene group, butylene group, pentylene group and hexylene group.

The average number of the functional groups represented by the formula (1) is 0.8 to 1 per molecule. If the average number of the functional groups per molecule is less than 0.8, the modified linear diene polymer (A) does not interact sufficiently with a filler and fails to effectively offer sufficient enhancements in properties of a crosslinked product of a rubber composition including the modified linear diene polymer (A). If the average number of the functional groups exceeds 1 (if the polymer has the functional groups not only at one end but also at the other end or a position in the polymer chain other than the ends), the modified linear diene polymer (A) comes to interact with a filler so strongly that the effects of enhancing properties are impaired. To ensure that a crosslinked product of a rubber composition including the modified linear diene polymer (A) will attain further enhancements in properties, the average number of the functional groups represented by the formula (1) per molecule is preferably 0.85 to 1, and more preferably 0.9 to 1.

In a preferred embodiment, the average number of the functional groups represented by the formula (1) is not less than 0.8 and less than 1 per molecule. If the average number of the functional groups per molecule is less than 0.8,

the modified linear diene polymer (A) does not interact sufficiently with a filler and may fail to effectively offer sufficient enhancements in properties of a crosslinked product of a rubber composition including the modified linear diene polymer (A). If the average number of the functional groups is 1 or greater (if the molecules are perfectly modified at one end or if the polymer has the functional groups not only at one end but also at the other end or a position in the polymer chain other than the ends), the modified linear diene polymer (A) comes to show so strong interaction mediated by the functional groups (including interaction between the functional groups) that the effects of enhancing properties are sometimes impaired. To ensure that a crosslinked product of a rubber composition including the modified linear diene polymer (A) will attain further enhancements in properties, the average number of the functional groups represented by the formula (1) per molecule is preferably not less than 0.85, and more preferably not less than 0.9. From the similar viewpoint, the average number of the functional groups per molecule is preferably less than 1, and more preferably 0.99 or less.

The average number of the functional groups per molecule of the modified linear diene polymer (A) may be calculated by $^{1}$H-NMR based on the peak assigned to the polymerization initiator and the peak assigned to the urethane bonds.

The modified linear diene polymer (A) is preferably a liquid polymer. The melt viscosity of the modified linear diene polymer (A) measured at 38°C is preferably 0.1 to 4,000 Pa·s, more preferably 0.1 to 2,000 Pa·s, still more preferably 0.1 to 1,500 Pa·s, and particularly preferably 1 to 1,000 Pa·s. When the melt viscosity of the modified linear diene polymer (A) is in the above range, the addition of the modified linear diene polymer (A) enhances the flexibility of the rubber composition, resulting in enhanced processability. In the present invention, the melt viscosity is a value measured with a Brookfield viscometer at 38°C.

In a preferred embodiment from the points of view of the handleability of the modified linear diene polymer (A) and also enhancements in properties of a rubber composition and crosslinked products thereof, the melt viscosity of the modified linear diene polymer (A) measured at 38°C is 0.1 to 20 Pa-s, and preferably 1 to 15 Pa-s.

The weight average molecular weight (Mw) of the modified linear diene polymer (A) is preferably not less than 1,000 and not more than 120,000. In the present invention, the Mw is the polystyrene-equivalent weight average molecular weight determined by gel permeation chromatography (GPC) measurement. When the Mw of the modified linear diene polymer (A) is in the above range, the process flow efficiency during production is excellent, and good economic efficiency is obtained. When such a modified linear diene polymer (A) is added to a rubber composition, the rubber composition comes to exhibit good processability. When the rubber composition further includes a solid rubber (B) and a filler (C) which are described later, the filler (C) is allowed to be dispersed in a state that is ideal for attaining desired enhancements in properties (for example, rolling resistance performance and breaking energy).

In a preferred embodiment from the point of view of rolling resistance performance, the Mw of the modified linear diene polymer (A) is preferably not less than 1,000 and not more than 120,000, more preferably not less than 15,000 and not more than 100,000, and still more preferably not less than 15,000 and not more than 80,000.

In another preferred embodiment from the point of view of enhancements in the processability and breaking energy of a rubber composition, the Mw of the modified linear diene polymer (A) is preferably not less than 1,000 and less than 15, 000, more preferably not less than 2,000 and less than 10,000, still more preferably not less than 3, 000 and less than 10,000, and further preferably more than 5,000 and less than 6,000.

In the present invention, two or more kinds of modified linear diene polymers (A) having different Mw may be used in combination.

The ratio of the weight average molecular weight (Mw) to the number average molecular weight (Mn), namely, the molecular weight distribution (Mw/Mn) of the modified linear diene polymer (A) is preferably 1.0 to 2.0, more preferably 1.0 to 1.6, still more preferably 1.0 to 1.4, further preferably 1.0 to 1.2, and particularly preferably 1.0 to 1.09. This range of Mw/Mn is more advantageous in that the modified linear diene polymer (A) that is obtained has a small variation in viscosity and in that a rubber composition and crosslinked products thereof attain enhanced properties. The number average molecular weight (Mn) and the molecular weight distribution (Mw/Mn) are the number average molecular weight (Mn) and the ratio of weight average molecular weight (Mw) to number average molecular weight (Mn) each measured by GPC relative to standard polystyrenes.

The vinyl content in the modified linear diene polymer (A) is preferably not more than 90 mol%, more preferably not more than 85 mol%, still more preferably not more than 80 mol%, and further preferably not more than 70 mol%. The vinyl content in the modified linear diene polymer (A) is preferably not less than 0.5 mol%, more preferably not less than 1 mol%, still more preferably not less than 30 mol%, and further preferably not less than 50 mol%. In the present invention, the "vinyl content" means the total molar percentage of 1,2-bonded or 3,4-bonded conjugated diene units (conjugated diene units except 1, 4-bonded conjugated diene units) relative to the total of isoprene units, butadiene units and conjugated diene (a1) units other than isoprene and butadiene units in the modified linear diene polymer taken as 100 mol%. The vinyl content may be determined by $^{1}$H-NMR based on the area ratio of the peaks assigned to 1,2-bonded or 3,4-bonded conjugated diene units and the peak assigned to 1,4-bonded conjugated diene units.

If the vinyl content is above 90 mol% and if such a modified linear diene polymer (A) is used in, for example, a rubber composition which further includes a solid rubber (B) and a filler (C) described later, the modified linear diene

polymer (A) exhibits a poor compatibility with the solid rubber (B) described later and, in spite of the addition of the modified linear diene polymer (A), the filler (C) is not allowed to be dispersed in the rubber composition in a state that is ideal for a crosslinked product to exhibit desired properties. In such cases, for example, the dispersibility in the rubber composition may be deteriorated and properties (for example, rolling resistance performance and breaking energy) of the crosslinked product that is obtained tend to be lowered.

In a preferred embodiment from the point of view of enhancing the abrasion resistance, the vinyl content in the modified linear diene polymer (A) is preferably less than 30 mol%, more preferably less than 25 mol%, and still more preferably less than 20 mol%.

In a preferred embodiment from the point of view of enhancing the wet grip performance, the vinyl content in the modified linear diene polymer (A) is preferably not less than 30 mol% and not more than 80 mol%, more preferably not less than 40 mol% and not more than 80 mol%, and still more preferably not less than 50 mol% and not more than 70 mol%.

The vinyl content in the modified linear diene polymer (A) may be brought to the desired value by, for example, selecting the types of a solvent and an optional polar compound used in the production of the unmodified linear diene polymer (A'), or controlling the production conditions such as polymerization temperature.

The glass transition temperature (Tg) of the modified linear diene polymer (A) is variable depending on factors such as the vinyl content in the isoprene units, butadiene units and conjugated diene (a1) units, the type of the conjugated diene (a1) and the content of units derived from monomers other than the conjugated dienes, but is preferably -150 to 50°C, more preferably -130 to 50°C, still more preferably -130 to 30°C, further preferably -100 to 0°C, and particularly preferably -60 to -30°C. When the Tg is in the above range, for example, a tire including a crosslinked product of the rubber composition attains good rolling resistance performance. Further, an excessive increase in viscosity can be avoided, and the material can be handled easily.

The modified linear diene polymers (A) may be used solely, or two or more may be used in combination.

The modified linear diene polymer (A) may be produced by any method without limitation. In a preferred embodiment, for example, the production method includes the following steps (I) to (IV).

Step (I): A monomer(s) including a conjugated diene is polymerized in the presence of an organic solvent using a monofunctional anionic polymerization initiator, and the polymerization reaction is terminated with an epoxy group-containing compound, thereby preparing a solution including a hydroxyl-modified linear diene polymer having a hydroxyl group only at one end thereof.

Step (II): A catalyst residue derived from the monofunctional anionic polymerization initiator is removed from the solution including the hydroxyl-modified linear diene polymer.

Step (III): The organic solvent is removed from the solution including the hydroxyl-modified linear diene polymer resulting from the step (II).

Step (IV) : The hydroxyl-modified linear diene polymer is reacted with a silane compound represented by the formula (1') described later.

These steps will be described in detail hereinbelow.

(Step (I))

In the step (I), first, a monomer(s) including a conjugated diene (a conjugated diene and an optional monomer other than conjugated dienes as required) is polymerized in the presence of an organic solvent using a monofunctional anionic polymerization initiator (solution polymerization).

Examples of the organic solvents include aliphatic hydrocarbons such as n-butane, n-pentane, isopentane, n-hexane, n-heptane and isooctane; alicyclic hydrocarbons such as cyclopentane, cyclohexane and methylcyclopentane; and aromatic hydrocarbons such as benzene, toluene and xylene.

The monofunctional anionic polymerization initiator is usually a monofunctional active metal or a monofunctional active metal compound capable of initiating anionic polymerization.

Preferred monofunctional active metal compounds capable of initiating anionic polymerization are monofunctional organoalkali metal compounds. Examples of the monofunctional organoalkali metal compounds include alkylmonolithiums such as methyllithium, ethyllithium, n-butyllithium, sec-butyllithium, t-butyllithium, hexyllithium, phenyllithium and stilbenelithium. Of the monofunctional organoalkali metal compounds, alkylmonolithiums are preferable.

The monofunctional anionic polymerization initiator may be used in an amount that is appropriately determined in accordance with factors such as the melt viscosity and molecular weight of the unmodified linear diene polymer (A') and the modified linear diene polymer (A) . The amount is usually 0.01 to 3 parts by mass with respect to 100 parts by mass of all the monomer(s) including a conjugated diene.

In the solution polymerization, a polar compound may be added as required for purposes such as to control the vinyl content in the diene polymer that is obtained. The polar compound is desirably a compound that does not deactivate the anionic polymerization reaction. Examples of the polar compounds include ether compounds such as

dibutyl ether, tetrahydrofuran, ethylene glycol diethyl ether and 2,2-di(2-tetrahydrofuryl)propane; tertiary amines such as tetramethylethylenediamine and trimethylamine; alkali metal alkoxides and phosphine compounds. The polar compound is usually used in an amount of 0.01 to 1000 mol per 1 mol of the monofunctional anionic polymerization initiator.

The temperature of the solution polymerization is usually in the range of -80 to 150°C, preferably in the range of 0 to 100°C, and more preferably in the range of 10 to 90°C. The polymerization mode may be batchwise or continuous.

In the step (I), the polymerization reaction is terminated by adding an epoxy group-containing compound which serves as a polymerization terminator. By this termination of the polymerization reaction, a solution is obtained which includes a hydroxyl-modified linear diene polymer (A") having a hydroxyl group only at one end thereof. The epoxy group-containing compound serving as a polymerization terminator is desirably a compound having one epoxy group, with examples including ethylene oxide, propylene oxide, 1,2-butylene oxide and 2,3-butylene oxide. Of these, ethylene oxide and propylene oxide are preferable because a hydroxyl group can be efficiently introduced at one end of the linear diene polymer.

To ensure that the average number of the functional groups per molecule of the final modified linear diene polymer (A) will fall in the desired range, the ratio (t) / (i) of the number of moles (t) of the epoxy groups in the epoxy group-containing compound to the number of moles (i) of the monofunctional anionic polymerization initiator is preferably 2 to 0.8, and more preferably 1.5 to 1. Further, the temperature of the solution at which the polymerization reaction is terminated by the addition of the epoxy group-containing compound is preferably 10 to 90°C, and more preferably 30 to 70°C.

(Step (II))

In the step (II), a catalyst residue derived from the monofunctional anionic polymerization initiator is removed from the solution including the hydroxyl-modified linear diene polymer (A"). In this step (II), it is desirable that the catalyst residue derived from the monofunctional anionic polymerization initiator be removed to a sufficient extent. When, for example, the monofunctional anionic polymerization initiator that is used is a monofunctional active metal or a monofunctional active metal compound, the amount of the catalyst residue derived from the monofunctional anionic polymerization initiator is preferably in the range of 0 to 200 ppm in terms of metal, more preferably in the range of 0 to 150 ppm, and still more preferably in the range of 0 to 100 ppm. When, for example, the polymerization catalyst used for the production of the hydroxyl-modified linear diene polymer (A") is a monofunctional organoalkali metal compound such as an alkylmonolithium, the metal based on which the catalyst residue content is determined is the alkali metal such as lithium. By controlling the catalyst residue content to the above range, the reaction in the step (IV) described later may be performed efficiently. The catalyst residue content may be measured with, for example, a polarized Zeeman atomic absorption spectrophotometer.

The catalyst residue derived from the monofunctional anionic polymerization initiator may be removed to a sufficient extent by, for example, purifying the solution including the hydroxyl-modified linear diene polymer (A"). The purification is preferably performed by washing with water, an organic solvent represented by methanol, acetone or the like, or supercritical fluid carbon dioxide. Water washing is more preferable in consideration of aspects such as economic efficiency. From the economic point of view, the number of washing operations is preferably 1 to 20 times, and more preferably 1 to 10 times. The washing temperature is preferably 20 to 100°C, and more preferably 40 to 90°C. Prior to the polymerization reaction, the monomers may be purified by distillation or with an adsorbent to remove impurities that will inhibit the polymerization. Such purification allows the polymerization to take place with a reduced amount of the polymerization catalyst, thus making it possible to reduce the catalyst residue content.

(Step (III))

In the step (III), the organic solvent is removed from the solution of the hydroxyl-modified linear diene polymer (A") resulting from the step (II). The organic solvent may be removed by any method without limitation. In consideration of aspects such as economic efficiency, the organic solvent is preferably removed by heating of the solution of the hydroxyl-modified linear diene polymer (A") obtained through the step (II). The heating temperature may be determined appropriately in consideration of factors such as the boiling point of the organic solvent used in the polymerization, but is usually 80 to 200°C, and preferably 120 to 180°C. When the organic solvent is removed by heating, the pressure may be reduced or increased as required.

(Step (IV))

In the step (IV), the hydroxyl-modified linear diene polymer (A") is reacted with a silane compound represented by the following formula (1').

[Chem. 4]

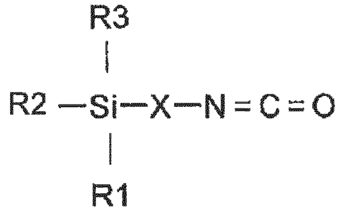

(1')

In the formula (1'), R1, R2 and R3 are each independently a methoxy group, an ethoxy group, a phenoxy group, a methyl group, an ethyl group or a phenyl group, at least one of R1, R2 and R3 is a methoxy group, an ethoxy group or a phenoxy group, and X is a divalent alkylene group having 1 to 6 carbon atoms.

Examples of the silane compounds (1') include

isocyanatoethyltriethoxysilane,
3-isocyanatopropyltriethoxysilane,
3-isocyanatopropyltrimethoxysilane,
isocyanatoisopropyltriethoxysilane and
5-isocyanatopentyltriethoxysilane. The silane compounds (1') may be used solely, or two or more may be used in combination.

The isocyanate group (-NCO) of the silane compound (1') reacts (forms urethane) with the hydroxyl group (-OH) present at the end of the hydroxyl-modified linear diene polymer (A") to give a modified linear diene polymer (A) in which the functional group represented by the formula (1) is introduced at one end of the linear diene polymer.

The reaction of the hydroxyl-modified linear diene polymer (A") with the silane compound (1') may be performed in any manner without limitation. For example, a method may be adopted in which the silane compound (1') and optionally a urethane reaction accelerating catalyst are added to the hydroxyl-modified linear diene polymer (A"), and the mixture is heated in the presence or absence of an organic solvent.

Examples of the urethane reaction accelerating catalysts include tin octylate, tin naphthenate, tin stearate, dibutyltin dioctanoate, dibutyltin dilaurate, dioctyltin diversatate, dibutyltin bistriethoxysilicate, dibutyltin dioleylmaleate, dibutyltin diacetate, 1,1,3,3-tetrabutyl-1,3-dilauryloxycarbonyl-distannoxane, dibutyltin oxybisethoxysilicate, dibutyltin oxide, reaction products of dibutyltin oxide and phthalic acid esters, reaction products of dibutyltin oxide and maleic acid diesters, and dibutyltin diacetylacetonate. Other organometal compounds may also be used, with examples including carboxylic acid (for example, octanoic acid) salts of bismuth, barium, calcium, indium, titanium, zirconium, calcium, zinc, iron, cobalt and lead, for example, bismuth octanoate and calcium octanoate. These may be used solely, or two or more may be used in combination.

Examples of the organic solvents which are generally used in the above method include hydrocarbon solvents and halogenated hydrocarbon solvents. Of the organic solvents, hydrocarbon solvents such as n-butane, n-hexane, n-heptane, cyclohexane, benzene, toluene and xylene are preferable.

For purposes such as to suppress side reactions, the reaction in the step (IV) may involve an antioxidant.

Some preferred examples of the antioxidants used for such purposes are 2,6-di-t-butyl-4-methylphenol (BHT),

2,2'-methylenebis(4-methyl-6-t-butylphenol),
4,4'-thiobis(3-methyl-6-t-butylphenol),
4,4'-butylidenebis(3-methyl-6-t-butylphenol) (AO-40),
3,9-bis[1,1-dimethyl-2-[3-(3-t-butyl-4-hydroxy-5-methylphe nyl)propionyloxy]ethyl]-2,4,8,10-tetraoxaspiro[5.5]undecan e (AO-80), 2,4-bis[(octylthio)methyl]-6-methylphenol (Irganox 1520L),
2,4-bis[(dodecylthio)methyl]-6-methylphenol (Irganox 1726),
2-[1-(2-hydroxy-3,5-di-t-pentylphenyl)ethyl]-4,6-di-t-pent ylphenyl acrylate (Sumilizer GS),
2-t-butyl-6-(3-t-butyl-2-hydroxy-5-methylbenzyl)-4-methylp henyl acrylate (Sumilizer GM),
6-t-butyl-4-[3-(2,4,8,10-tetra-t-butyldibenzo[d,f] [1,3,2]d ioxaphosphepin-6-yloxy)propyl]-2-methylphenol (Sumilizer GP), tris(2,4-di-t-butylphenyl) phosphite (Irgafos 168), dioctadecyl 3,3'-dithiobispropionate, hydroquinone, p-methoxyphenol,
N-phenyl-N'-(1,3-dimethylbutyl)-p-phenylenediamine (Nocrac 6C), bis(2,2,6,6-tetramethyl-4-piperidyl) sebacate (LA-77Y), N,N-dioctadecylhydroxylamine (Irgastab FS 042) and
bis(4-t-octylphenyl)amine (Irganox 5057). The antioxidants may be used solely, or two or more may be used in

combination.

The amount of the antioxidant added is preferably 0 to 10 parts by mass, and more preferably 0 to 5 parts by mass with respect to 100 parts by mass of the hydroxyl-modified linear diene polymer (A").

The ratio in which the hydroxyl-modified linear diene polymer (A") and the silane compound (1') are mixed together may be selected appropriately so that, for example, the final modified linear diene polymer (A) will have the desired average number of the functional groups per molecule. For example, they may be mixed so that the ratio (s)/(o) of the number of moles (s) of the silane compound (1') to the number of moles (o) of the hydroxyl groups present at the terminals of the hydroxyl-modified linear diene polymer (A") will be 0.8 to 1.2.

In the step (IV), it is desirable that the hydroxyl-modified linear diene polymer and the silane compound represented by the formula (1') be reacted together at an appropriate reaction temperature for a sufficient amount of reaction time. For example, the reaction temperature is preferably 10 to 120°C, and more preferably 40°C to 100°C. The reaction time is preferably 1 to 10 hours, more preferably 1 to 8 hours, and still more preferably 1 to 6 hours.

The reaction in the step (IV) may be carried out after at least part of the unsaturated bonds present in the hydroxyl-modified linear diene polymer (A") is hydrogenated during the period between the end of the step (I) and the start of the step (IV). Alternatively, at least part of the unsaturated bonds present in the modified linear diene polymer obtained from the step (IV) may be hydrogenated. Such a hydrogenated polymer may also be used as the modified linear diene polymer (A).

In a preferred embodiment, the modified linear diene polymer (A) obtained in the present invention is used as a component in a rubber composition including, for example, a solid rubber (B) and a filler (C) described below. In such a rubber composition including components such as a solid rubber and a filler, the modified linear diene polymer (A) allows the filler to be dispersed in a crosslinked product of the composition in a state that is ideal for attaining enhanced properties.

[Solid rubbers (B)]

The solid rubber (B) used in the rubber composition is a rubber that can be handled as a solid at 20°C. The Mooney viscosity $ML_{1+4}$ of the solid rubber (B) at 100°C is usually in the range of 20 to 200. Examples of the solid rubbers (B) include natural rubbers, styrene butadiene rubbers (hereinafter, also written as "SBRs"), butadiene rubbers, isoprene rubbers, butyl rubbers, halogenated butyl rubbers, ethylene propylene diene rubbers, butadiene acrylonitrile copolymer rubbers, chloroprene rubbers, acrylic rubbers, fluororubbers and urethane rubbers. Of these solid rubbers (B), natural rubbers, SBRs, butadiene rubbers and isoprene rubbers are preferable, and natural rubbers and SBRs are more preferable. The solid rubbers (B) may be used solely, or two or more may be used in combination.

To ensure that the obtainable rubber composition and crosslinked products will exhibit desired characteristics sufficiently, the number average molecular weight (Mn) of the solid rubber (B) is preferably not less than 80,000, and more preferably in the range of 100,000 to 3,000,000. In the present specification, the number average molecular weight is the polystyrene equivalent number average molecular weight measured by gel permeation chromatography (GPC).

Examples of the natural rubbers include those natural rubbers generally used in the tire industry, with specific examples including TSRs (technically specified rubbers) such as SMRs (TSRs from Malaysia), SIRs (TSRs from Indonesia) and STRs (TSRs from Thailand), and RSSs (ribbed smoked sheets), high-purity natural rubbers and modified natural rubbers such as epoxidized natural rubbers, hydroxylated natural rubbers, hydrogenated natural rubbers and grafted natural rubbers. In particular, SMR 20, STR 20 and RSS #3 are preferable from the points of view of stable quality and high availability. The natural rubbers may be used solely, or two or more may be used in combination.

The SBRs may be any such rubbers generally used in tire applications. Specifically, those rubbers having a styrene content of 0.1 to 70 mass% are preferable, and the styrene content is more preferably 5 to 50 mass%, and still more preferably 15 to 35 mass%. Further, those rubbers having a vinyl content of 0.1 to 60 mass% are preferable, and the vinyl content is more preferably 0.1 to 55 mass%.

The weight average molecular weight (Mw) of the SBRs is preferably 100,000 to 2,500,000, more preferably 150,000 to 2,000,000, and still more preferably 200,000 to 1,500,000. This molecular weight ensures that processability and mechanical strength are satisfied at the same time. In the present specification, the weight average molecular weight is the polystyrene equivalent weight average molecular weight measured by gel permeation chromatography (GPC).

The SBRs used in the invention preferably have a glass transition temperature of -95 to 0°C, and more preferably -95 to -5°C as measured by differential thermal analysis. With this glass transition temperature, the SBR exhibits a viscosity that is easy to handle.

SBR which may be used in the invention may be obtained by copolymerizing styrene and butadiene. The SBR production process is not particularly limited and may be any of emulsion polymerization, solution polymerization, gas-phase polymerization and bulk polymerization. Of these production processes, emulsion polymerization and solution polymerization are preferable.

An emulsion-polymerized styrene butadiene rubber (hereinafter, also written as E-SBR) may be produced by a usual emulsion polymerization process that is known or is deemed as known. For example, such a rubber may be obtained by emulsifying and dispersing prescribed amounts of styrene and butadiene monomers in the presence of an emulsifier and emulsion polymerizing the monomers with a radical polymerization initiator.

A solution-polymerized styrene butadiene rubber (hereinafter, also written as S-SBR) may be produced by a usual solution polymerization process. For example, styrene and butadiene are polymerized in a solvent with an active metal capable of catalyzing anionic polymerization optionally in the presence of a polar compound as desired.

Examples of the solvents include aliphatic hydrocarbons such as n-butane, n-pentane, isopentane, n-hexane, n-heptane and isooctane; alicyclic hydrocarbons such as cyclopentane, cyclohexane and methylcyclopentane; and aromatic hydrocarbons such as benzene and toluene. It is usually preferable to use the solvent in such an amount that the monomer concentration will be 1 to 50 mass%.

Examples of the active metals capable of catalyzing anionic polymerization include alkali metals such as lithium, sodium and potassium; alkaline earth metals such as beryllium, magnesium, calcium, strontium and barium; and lanthanoid rare earth metals such as lanthanum and neodymium. Of these active metals, alkali metals and alkaline earth metals are preferable, and alkali metals are more preferable. Of the alkali metals, organoalkali metal compounds are more preferably used.

Examples of the organoalkali metal compounds include organomonolithium compounds such as n-butyllithium, sec-butyllithium, t-butyllithium, hexyllithium, phenyllithium and stilbenelithium; polyfunctional organolithium compounds such as dilithiomethane, 1,4-dilithiobutane, 1,4-dilithio-2-ethylcyclohexane and 1,3,5-trilithiobenzene; sodium naphthalene and potassium naphthalene. In particular, organolithium compounds are preferable, and organomonolithium compounds are more preferable. The amount in which the organoalkali metal compounds are used may be determined appropriately in accordance with the desired molecular weight of S-SBR. The organoalkali metal compound may be used in the form of an organoalkali metal amide by being subjected to a reaction with a secondary amine such as dibutylamine, dihexylamine or dibenzylamine.

The polar compounds are not particularly limited as long as the compounds do not deactivate the anionic polymerization reaction and are generally used for the purposes of controlling the microstructure of butadiene moieties and controlling the distribution of styrene in copolymer chains. Examples include ether compounds such as dibutyl ether, tetrahydrofuran and ethylene glycol diethyl ether; tertiary amines such as tetramethylethylenediamine and trimethylamine; alkali metal alkoxides and phosphine compounds.

The temperature of the polymerization reaction is usually in the range of -80 to 150°C, preferably 0 to 100°C, and more preferably 30 to 90°C. The polymerization mode may be batchwise or continuous. To enhance the random copolymerizability of styrene and butadiene, it is preferable to supply styrene and butadiene into the reaction liquid continuously or intermittently so that styrene and butadiene in the polymerization system will have a specific composition ratio.

The polymerization reaction may be terminated by the addition of an alcohol such as methanol or isopropanol as a polymerization terminator. After the termination of the polymerization reaction, the target S-SBR may be recovered by separating the solvent from the polymerization solution by a method such as direct drying or steam stripping. The polymerization solution may be mixed together with an extender oil before the removal of the solvent, and the rubber may be recovered as an oil-extended rubber.

As long as the advantageous effects of the invention are not impaired, the SBR may be a modified SBR obtained by introducing functional groups into SBR. Examples of the functional groups include amino groups, alkoxysilyl groups, hydroxyl groups, epoxy groups and carboxyl groups.

For example, the modified SBR may be produced by adding, before the addition of the polymerization terminator, an agent capable of reacting with active ends of the polymer, for example, a coupling agent such as tin tetrachloride, tetrachlorosilane, dimethyldichlorosilane, dimethyldiethoxysilane, tetramethoxysilane, tetraethoxysilane, 3-aminopropyltriethoxysilane, tetraglycidyl-1,3-bisaminomethylcyclohexane or 2,4-tolylene diisocyanate, a chain end-modifying agent such as 4,4'-bis(diethylamino)benzophenone or N-vinylpyrrolidone, or any of modifying agents described in JP-A-2011-132298. In the modified SBR, the functional groups may be introduced at polymer ends or polymer side chains.

Examples of the butadiene rubbers include commercially available butadiene rubbers polymerized with Ziegler catalysts such as titanium tetrahalide-trialkylaluminum systems, diethylaluminum chloride-cobalt systems, trialkylaluminum-boron trifluoride-nickel systems and diethylaluminum chloride-nickel systems; lanthanoid rare earth metal catalysts such as triethylaluminum-organic acid neodymium-Lewis acid systems; or organoalkali metal compounds similarly to the S-SBRs. Ziegler-catalyzed butadiene rubbers are preferable because they have a high cis content. Use may be made of ultrahigh cis butadiene rubbers obtained using lanthanoid rare earth metal catalysts.

The vinyl content in the butadiene rubbers is preferably not more than 50 mass%, more preferably not more than 40 mass%, and still more preferably not more than 30 mass%. If the vinyl content exceeds 50 mass%, the rolling resistance performance tends to deteriorate. The lower limit of the vinyl content is not particularly limited. The glass transition temperature, although variable depending on the vinyl content, is preferably not more than -40°C, and more

preferably not more than -50°C.

The weight average molecular weight (Mw) of the butadiene rubbers is preferably 90,000 to 2, 000, 000, and more preferably 150,000 to 1,500,000. This Mw ensures that good processability and mechanical strength are obtained.

As long as the advantageous effects of the present invention are not impaired, a part of the butadiene rubbers may have branched structures or polar functional groups that are introduced by using polyfunctional modifiers, for example, tin tetrachloride, silicon tetrachloride, alkoxysilanes having an epoxy group in the molecule, or amino group-containing alkoxysilanes.

Examples of the isoprene rubbers include commercially available isoprene rubbers polymerized with Ziegler catalysts such as titanium tetrahalide-trialkylaluminum systems, diethylaluminum chloride-cobalt systems, trialkylaluminum-boron trifluoride-nickel systems and diethylaluminum chloride-nickel systems; lanthanoid rare earth metal catalysts such as triethylaluminum-organic acid neodymium-Lewis acid systems; or organoalkali metal compounds similarly to the S-SBRs. Ziegler-catalyzed isoprene rubbers are preferable because they have a high cis content. Use may be made of ultrahigh cis isoprene rubbers obtained using lanthanoid rare earth metal catalysts.

The vinyl content in the isoprene rubbers is preferably not more than 50 mass%, more preferably not more than 40 mass%, and still more preferably not more than 30 mass%. If the vinyl content exceeds 50 mass%, the rolling resistance performance tends to deteriorate. The lower limit of the vinyl content is not particularly limited. The glass transition temperature, although variable depending on the vinyl content, is preferably not more than -20°C, and more preferably not more than -30°C.

The weight average molecular weight (Mw) of the isoprene rubbers is preferably 90,000 to 2, 000, 000, and more preferably 150,000 to 1,500,000. This Mw ensures that high processability and mechanical strength are obtained.

As long as the advantageous effects of the invention are not impaired, a part of the isoprene rubbers may have branched structures or polar functional groups that are introduced by using polyfunctional modifiers, for example, tin tetrachloride, silicon tetrachloride, alkoxysilanes having an epoxy group in the molecule, or amino group-containing alkoxysilanes.

In the rubber composition, the content of the modified linear diene polymer (A) is preferably 0.1 to 50 parts by mass with respect to 100 parts by mass of the solid rubber (B), and is more preferably 0.1 to 45 parts by mass, still more preferably 0.5 to 40 parts by mass, further preferably 1 to 40 parts by mass, and particularly preferably 2 to 40 parts by mass. When the content of the modified linear diene polymer (A) is in the above range, the filler (C) is allowed to be dispersed in the rubber composition in an ideal state, and enhanced properties (for example, enhanced breaking energy, and enhanced rolling resistance performance of tires and the like) tend to be obtained.

[Fillers (C)]

Examples of the fillers (C) used in the rubber composition include inorganic fillers such as carbon blacks, silicas, clays, micas, calcium carbonate, magnesium hydroxide, aluminum hydroxide, barium sulfate, titanium oxides, glass fibers, fibrous fillers and glass balloons; and organic fillers such as resin particles, wood powders and cork powders. The incorporation of such fillers into the rubber composition makes it possible to attain improvements in properties such as mechanical strength, heat resistance and weather resistance, to control the hardness and to increase the bulk of the rubber. From points of view such as improvements in properties such as mechanical strength, carbon blacks and silicas are preferable as the fillers (C).

Examples of the carbon blacks include furnace blacks, channel blacks, thermal blacks, acetylene blacks and Ketjen blacks. From the point of view of enhancing the crosslinking rate and the mechanical strength, furnace blacks are preferable among the above carbon blacks. The carbon blacks may be used solely, or two or more may be used in combination.

To attain enhancements in properties such as dispersibility, mechanical strength and hardness, the average particle diameter of the carbon blacks is preferably 5 to 100 nm, more preferably 5 to 80 nm, and still more preferably 5 to 70 nm. The average particle diameter of the carbon blacks may be determined by measuring the diameters of the particles with a transmission electron microscope and calculating the average of the diameters.

Examples of the commercially available furnace blacks include "DIABLACK" manufactured by Mitsubishi Chemical Corporation and "SEAST" manufactured by Tokai Carbon Co., Ltd. Examples of the commercially available acetylene blacks include "DENKA BLACK" manufactured by Denka Company Limited. Examples of the commercially available Ketjen blacks include "ECP600JD" manufactured by Lion Specialty Chemicals Co., Ltd.

To attain enhancements in properties such as the wettability and dispersibility to the solid rubber (B), the carbon blacks may be treated with acids such as nitric acid, sulfuric acid, hydrochloric acid and mixed acids of these acids, or may be subjected to surface oxidation treatment by heating in the presence of air. To enhance the mechanical strength of the rubber composition and crosslinked products obtained from the composition, the carbon blacks may be heat treated at 2,000 to 3,000°C in the presence of a graphitization catalyst. Preferred examples of the graphitization catalysts include boron, boron oxides (for example, BzOz, $B_2O_3$, $B_4O_3$ and $B_4O_5$), boron oxoacids (for example, orthoboric acid,

metaboric acid and tetraboric acid) and salts thereof, boron carbides (for example, $B_4C$ and $B_6C$), boron nitride (BN) and other boron compounds.

The carbon blacks may be used after their particle size is adjusted by a technique such as crushing. Examples of the grinders which may be used for the crushing of the carbon blacks include high-speed rotary crushers (hammer mills, pin mills and cage mills), various ball mills (rotary mills, vibration mills and planetary mills) and stirring mills (bead mills, Attritor mills, flow tube type mills and annular mills).

Examples of the silicas include wet silicas (hydrous silicates), dry silicas (silicic anhydrides), calcium silicates and aluminum silicates. Of these silicas, wet silicas are preferable to attain further enhancements in processability, mechanical strength and abrasion resistance. The silicas may be used solely, or two or more may be used in combination.

To attain enhancements in processability, rolling resistance performance, mechanical strength and abrasion resistance, the average particle diameter of the silicas is preferably 0.5 to 200 nm, more preferably 5 to 150 nm, and still more preferably 10 to 100 nm. The average particle diameter of the silicas may be determined by measuring the diameters of the particles with a transmission electron microscope and calculating the average of the diameters.

Of the carbon blacks and the silicas described above, the silicas are more preferable from points of view such as enhancements in the rolling resistance performance of the obtainable rubber composition and crosslinked products thereof.

In the rubber composition, the content of the filler (C) is 20 to 200 parts by mass with respect to 100 parts by mass of the solid rubber (B), and is preferably 20 to 180 parts by mass, and more preferably 25 to 150 parts by mass. This content of the filler (C) ensures that the processability, the rolling resistance performance, the mechanical strength and the abrasion resistance are enhanced.

When any fillers other than the silicas and the carbon blacks are used as the fillers (C), the content thereof is preferably 20 to 120 parts by mass with respect to 100 parts by mass of the solid rubber (B), and is more preferably 20 to 110 parts by mass, and still more preferably 50 to 110 parts by mass.

The fillers (C) may be used solely, or two or more may be used in combination.

[Additional components]

The rubber composition may further include a crosslinking agent (D) for the crosslinking of the rubbers. Examples of the crosslinking agents (D) include sulfur, sulfur compounds, oxygen, organic peroxides, phenolic resins, amino resins, quinone and quinone dioxime derivatives, halogen compounds, aldehyde compounds, alcohol compounds, epoxy compounds, metal halides and organometal halides, and silane compounds. Examples of the sulfur compounds include morpholine disulfide and alkylphenol disulfides. Examples of the organic peroxides include cyclohexanone peroxide, methyl acetoacetate peroxide, t-butyl peroxyisobutyrate, t-butyl peroxybenzoate, benzoyl peroxide, lauroyl peroxide, dicumyl peroxide, di-t-butyl peroxide and 1,3-bis(t-butylperoxyisopropyl)benzene. The crosslinking agents (D) may be used solely, or two or more may be used in combination. From the point of view of the mechanical properties of crosslinked products, the content of the crosslinking agent (D) is usually 0.1 to 10 parts by mass with respect to 100 parts by mass of the solid rubber (B), and is preferably 0.5 to 10 parts by mass, and more preferably 0.8 to 5 parts by mass.

When the rubber composition contains, for example, sulfur, a sulfur compound or the like as the crosslinking agent (D) for the crosslinking (vulcanization) of the rubbers, the composition may further include a vulcanization accelerator (E). Examples of the vulcanization accelerators (E) include guanidine compounds, sulfenamide compounds, thiazole compounds, thiuram compounds, thiourea compounds, dithiocarbamic acid compounds, aldehyde-amine compounds, aldehyde-ammonia compounds, imidazoline compounds and xanthate compounds. The vulcanization accelerators (E) may be used solely, or two or more may be used in combination. The vulcanization accelerators (E) are usually used in an amount of 0.1 to 15 parts by mass, and preferably 0.1 to 10 parts by mass with respect to 100 parts by mass of the solid rubber (B) .

When the rubber composition contains, for example, sulfur, a sulfur compound or the like as the crosslinking agent (D) for the crosslinking (vulcanization) of the rubbers, the composition may further include a vulcanization aid (F). Examples of the vulcanization aids (F) include fatty acids such as stearic acid, metal oxides such as zinc oxide, and fatty acid metal salts such as zinc stearate. The vulcanization aids (F) may be used solely, or two or more may be used in combination. The vulcanization aids (F) are usually used in an amount of 0.1 to 15 parts by mass, and preferably 1 to 10 parts by mass with respect to 100 parts by mass of the solid rubber (B).

When the rubber composition contains a silica as the filler (C), it is preferable that the composition further include a silane coupling agent. Examples of the silane coupling agents include sulfide compounds, mercapto compounds, vinyl compounds, amino compounds, glycidoxy compounds, nitro compounds and chloro compounds.

Examples of the sulfide compounds include

bis(3-triethoxysilylpropyl) tetrasulfide,
bis(2-triethoxysilylethyl) tetrasulfide,

bis(3-trimethoxysilylpropyl) tetrasulfide,
bis(2-trimethoxysilylethyl) tetrasulfide,
bis(3-triethoxysilylpropyl) trisulfide,
bis(3-trimethoxysilylpropyl) trisulfide,
bis(3-triethoxysilylpropyl) disulfide,
bis(3-trimethoxysilylpropyl) disulfide,
3-trimethoxysilylpropyl-N,N-dimethylthiocarbamoyl tetrasulfide,
3-triethoxysilylpropyl-N,N-dimethylthiocarbamoyl tetrasulfide,
2-trimethoxysilylethyl-N,N-dimethylthiocarbamoyl tetrasulfide, 3-trimethoxysilylpropyl benzothiazole tetrasulfide, 3-triethoxysilylpropyl benzothiazole tetrasulfide, 3-triethoxysilylpropyl methacrylate monosulfide and 3-trimethoxysilylpropyl methacrylate monosulfide.

Examples of the mercapto compounds include

3-mercaptopropyltrimethoxysilane,
3-mercaptopropyltriethoxysilane,
2-mercaptoethyltrimethoxysilane and
2-mercaptoethyltriethoxysilane.

Examples of the vinyl compounds include vinyltriethoxysilane and vinyltrimethoxysilane.
Examples of the amino compounds include

3-aminopropyltriethoxysilane, 3-aminopropyltrimethoxysilane,
3-(2-aminoethyl)aminopropyltriethoxysilane and
3-(2-aminoethyl)aminopropyltrimethoxysilane.

Examples of the glycidoxy compounds include

$\gamma$-glycidoxypropyltriethoxysilane,
$\gamma$-glycidoxypropyltrimethoxysilane,
$\gamma$-glycidoxypropylmethyldiethoxysilane and
$\gamma$-glycidoxypropylmethyldimethoxysilane.

Examples of the nitro compounds include

3-nitropropyltrimethoxysilane and
3-nitropropyltriethoxysilane.

Examples of the chloro compounds include

3-chloropropyltrimethoxysilane,
3-chloropropyltriethoxysilane,
2-chloroethyltrimethoxysilane and
2-chloroethyltriethoxysilane.

The silane coupling agents may be used solely, or two or more may be used in combination. Of the above silane coupling agents, bis(3-triethoxysilylpropyl) disulfide, bis(3-triethoxysilylpropyl) tetrasulfide and 3-mercaptopropyltrimethoxysilane are preferable because the addition of these compounds provides high effects and is cost-effective.
The content of the silane coupling agent is preferably 0.1 to 30 parts by mass with respect to 100 parts by mass of the silica, and is more preferably 0.5 to 20 parts by mass, and still more preferably 1 to 15 parts by mass. This content of the silane coupling agent ensures that dispersibility, coupling effects, reinforcing effects and abrasion resistance are enhanced.
Where necessary, the rubber composition may include softeners in order to attain improvements in properties such as processability and fluidity while still ensuring that the advantageous effects of the invention are not impaired. Examples of the softeners include process oils such as silicone oils, aromatic oils, TDAEs (treated distilled aromatic extracts), MESs (mild extracted solvates), RAEs (residual aromatic extracts), paraffin oils and naphthenic oils, and resin components such as aliphatic hydrocarbon resins, alicyclic hydrocarbon resins, C9 resins, rosin resins, coumarone-indene resins and phenolic resins. When the rubber composition contains the process oil as the softener, the content

thereof is preferably less than 50 parts by mass with respect to 100 parts by mass of the solid rubber (B).

The rubber composition may contain additives as required in order to attain enhancements in properties such as weather resistance, heat resistance and oxidation resistance, while still achieving the advantageous effects of the invention. Examples of such additives include antioxidants, waxes, oxidation inhibitors, lubricants, light stabilizers, scorch inhibitors, processing aids, colorants such as pigments and coloring matters, flame retardants, antistatic agents, matting agents, antiblocking agents, UV absorbers, release agents, foaming agents, antibacterial agents, mildew-proofing agents and perfumes. Examples of the oxidation inhibitors include hindered phenol compounds, phosphorus compounds, lactone compounds and hydroxyl compounds. Examples of the antioxidants include amine-ketone compounds, imidazole compounds, amine compounds, phenolic compounds, sulfur compounds and phosphorus compounds. The additives may be used solely, or two or more may be used in combination.

[Methods for producing rubber compositions]

The rubber composition may be produced by any methods without limitation as long as the components can be mixed homogeneously. Examples of the apparatuses used in the production of the rubber composition include tangential or intermeshing internal kneaders such as kneader-ruders, Brabender mixers, Banbury mixers and internal mixers, single-screw extruders, twin-screw extruders, mixing rolls and rollers. The production of the rubber composition may be usually carried out at a temperature in the range of 70 to 270°C.

[Crosslinked products]

Crosslinked products may be obtained by crosslinking the rubber composition described hereinabove. The conditions under which the rubber composition is crosslinked may be selected appropriately in accordance with factors such as use applications. When, for example, the rubber composition is crosslinked (vulcanized) in a mold with use of sulfur or a sulfur compound as the crosslinking agent, the crosslinking (vulcanization) may be usually performed at a crosslinking temperature of 120 to 200°C and a pressure of 0.5 to 2.0 MPa.

The crosslinked products are preferably such that the modified linear diene polymer (A) is extracted therefrom with an extraction ratio of not more than 20 mass%, more preferably not more than 15 mass%, and still more preferably not more than 10 mass%.

The extraction ratio may be calculated by soaking 2 g of the crosslinked product into 400 mL of toluene at 23°C for 48 hours and determining the amount of the modified linear diene polymer (A) extracted into toluene.

The rubber composition and the crosslinked products of the rubber composition may be used to constitute at least portions of tires. Such tires exhibit excellent rolling resistance performance and have high breaking energy by virtue of the filler (C) being dispersed in an ideal state.

EXAMPLES

The present invention will be described in further detail by presenting Examples hereinbelow without limiting the scope of the invention to such Examples.

The following are the components used in Examples and Comparative Examples.

〈Modified linear diene polymers (A)

Modified linear diene polymers obtained in Production Examples 1 and 2 described later.

〈Modified linear diene polymers (α)〉

Modified linear diene polymers obtained in Production Examples 3 and 5 described later.

(Linear unmodified diene polymer (A'))

Linear unmodified diene polymer obtained in Production Example 4 described later.

〈Solid rubbers (B)〉

Solution-polymerized styrene butadiene rubber: HPR355 (manufactured by JSR CORPORATION, styrene content: 28 mass%, vinyl content: 56 mass%).

Butadiene rubber: BR01 (manufactured by JSR CORPORATION, Mw: 550,000, cis content: 95 mass%).

⟨Filler (C)⟩

Silica: ULTRASIL 7000GR (manufactured by Evonik Degussa Japan, wet silica, average particle diameter: 14 nm).

⟨Crosslinking agent (D)⟩

Sulfur (sulfur fine powder 200 mesh, manufactured by Tsurumi Chemical Industry Co., Ltd.).

⟨Vulcanization accelerators (E)⟩

Vulcanization accelerator (1): Nocceler CZ-G (manufactured by Ouchi Shinko Chemical Industrial Co., Ltd.) .
Vulcanization accelerator (2) : Nocceler D (manufactured by Ouchi Shinko Chemical Industrial Co., Ltd.).
Vulcanization accelerator (3): Nocceler TBT-N (manufactured by Ouchi Shinko Chemical Industrial Co., Ltd.) .

(Vulcanization aids (F))

Stearic acid: LUNAC S-20 (manufactured by Kao Corporation).
Zinc oxide: Zinc oxide (manufactured by Sakai Chemical Industry Co., Ltd.).

(Optional components)

TDAE: VivaTec 500 (manufactured by H&R).
Silane coupling agent: Si-75 (manufactured by Evonik Degussa Japan).
Antioxidant: Nocrac 6C (manufactured by Ouchi Shinko Chemical Industrial Co., Ltd.).
Wax: SUNTIGHT S (manufactured by Seiko Chemical Co., Ltd.).

Production Example 1: Production of modified linear diene polymer (A-1)

A thoroughly dried 5 L autoclave was purged with nitrogen and was loaded with 1680 g of hexane, 6.2 g of N,N,N',N'-tetramethylethylenediamine and 122 g of n-butyllithium (15.6 mass% hexane solution). After the temperature had been increased to 50°C, 850 g of butadiene was added stepwise while performing stirring and while controlling the polymerization temperature at 50°C. One minute after the whole amount of butadiene had been added, 14.5 g of ethylene oxide was added, and the mixture was stirred for 60 minutes, thereby terminating the polymerization reaction. Thereafter, 11.5 g of methanol was added. A polymer solution was thus obtained. To the polymer solution obtained, warm water having a temperature of 60°C was added in polymer solution/warm water volume ratio of 2/1, and the mixture was stirred for 30 minutes and then allowed to stand for 30 minutes. After the liquid had separated into the polymer solution phase and the aqueous phase, the aqueous phase was removed. This washing operation was repeated until the pH of the aqueous phase and the polymer solution phase became 6 to 8, thereby removing the catalyst residue. The polymer solution obtained by the washing operation was heated to 160°C in 8 hours to remove the solvent. A hydroxyl-modified linear diene polymer (A"-1) was thus obtained.
Subsequently, a 1 L volume autoclave was loaded with 700 g of the hydroxyl-modified linear diene polymer (A"-1) obtained above, 66.9 g of 3-isocyanatopropyltriethoxysilane and 14 mg of dibutyltin dilaurate. The mixture was reacted while performing stirring at 60°C for 3 hours. A modified linear diene polymer (A-1) was thus obtained.

Production Example 2: Production of modified linear diene polymer (A-2)

A thoroughly dried 5 L autoclave was purged with nitrogen and was loaded with 1680 g of hexane, 6.2 g of N,N,N' ,N'-tetramethylethylenediamine and 122 g of n-butyllithium (15.6 mass% hexane solution). After the temperature had been increased to 50°C, 850 g of butadiene was added stepwise while performing stirring and while controlling the polymerization temperature at 50°C. Fifteen minutes after the whole amount of butadiene had been added, 14.5 g of ethylene oxide was added, and the mixture was stirred for 60 minutes, thereby terminating the polymerization reaction. Thereafter, 11.5 g of methanol was added. A polymer solution was thus obtained. To the polymer solution obtained, warm water having a temperature of 60°C was added in polymer solution/warm water volume ratio of 2/1, and the mixture was stirred for 30 minutes and then allowed to stand for 30 minutes. After the liquid had separated into the polymer solution phase and the aqueous phase, the aqueous phase was removed. This washing operation was repeated until the pH of the aqueous phase and the polymer solution phase became 6 to 8, thereby removing the catalyst residue. The polymer solution obtained by the washing operation was heated to 160°C in 8 hours to remove the solvent. A

hydroxyl-modified linear diene polymer (A"-2) was thus obtained.

Subsequently, a 1 L volume autoclave was loaded with 700 g of the hydroxyl-modified linear diene polymer (A"-2) obtained above, 59.3 g of 3-isocyanatopropyltriethoxysilane and 14 mg of dibutyltin dilaurate. The mixture was reacted while performing stirring at 60°C for 3 hours. A modified linear diene polymer (A-2) was thus obtained.

Production Example 3: Production of modified linear diene polymer ($\alpha$-1)

A thoroughly dried 5 L autoclave was purged with nitrogen and was loaded with 1680 g of hexane, 6.2 g of N,N,N',N'-tetramethylethylenediamine and 122 g of n-butyllithium (15.6 mass% hexane solution). After the temperature had been increased to 50°C, 850 g of butadiene was added stepwise while performing stirring and while controlling the polymerization temperature at 50°C. Thirty minutes after the whole amount of butadiene had been added, 14.5 g of ethylene oxide was added, and the mixture was stirred for 60 minutes, thereby terminating the polymerization reaction. Thereafter, 11.5 g of methanol was added. A polymer solution was thus obtained. To the polymer solution obtained, warm water having a temperature of 60°C was added in polymer solution/warm water volume ratio of 2/1, and the mixture was stirred for 30 minutes and then allowed to stand for 30 minutes. After the liquid had separated into the polymer solution phase and the aqueous phase, the aqueous phase was removed. This washing operation was repeated until the pH of the aqueous phase and the polymer solution phase became 6 to 8, thereby removing the catalyst residue. The polymer solution obtained by the washing operation was heated to 160°C in 8 hours to remove the solvent. A hydroxyl-modified linear diene polymer (A"-3) was thus obtained.

Subsequently, a 1 L volume autoclave was loaded with 700 g of the hydroxyl-modified linear diene polymer (A"-3) obtained above, 51.7 g of 3-isocyanatopropyltriethoxysilane and 14 mg of dibutyltin dilaurate. The mixture was reacted while performing stirring at 60°C for 3 hours. A modified linear diene polymer ($\alpha$-1) was thus obtained.

Production Example 4: Production of unmodified linear diene polymer (A'-1)

A thoroughly dried 5 L autoclave was purged with nitrogen and was loaded with 1680 g of hexane, 6.2 g of N,N,N',N'-tetramethylethylenediamine and 122 g of n-butyllithium (15.6 mass% hexane solution). After the temperature had been increased to 50°C, 850 g of butadiene was added stepwise while performing stirring and while controlling the polymerization temperature at 50°C. Thirty minutes after the whole amount of butadiene had been added, 11.5 g of methanol was added to terminate the polymerization reaction. A polymer solution was thus obtained. To the polymer solution obtained, warm water having a temperature of 60°C was added in polymer solution/warm water volume ratio of 2/1, and the mixture was stirred for 30 minutes and then allowed to stand for 30 minutes. After the liquid had separated into the polymer solution phase and the aqueous phase, the aqueous phase was removed. This washing operation was repeated until the pH of droplets of the aqueous phase and the polymer solution phase became 6 to 8, thereby removing the catalyst residue. The polymer solution obtained by the washing operation was heated to 160 °C in 8 hours to remove the solvent. A unmodified linear diene polymer (A'-1) was thus obtained.

Production Example 5: Production of graft-modified linear diene polymer ($\alpha$-2)

A 1 L volume autoclave was loaded with 700 g of the unmodified linear diene polymer (A'-1) obtained in Production Example 4, and was deaerated with nitrogen while performing stirring at 60°C for 3 hours. There were added 0.2 g of 1,1-bis(t-hexylperoxy)cyclohexane and 65 g of 3-mercaptopropyltriethoxysilane. The mixture was reacted at 105°C for 8 hours. A modified linear diene polymer ($\alpha$-2) was thus obtained.

Properties of the materials such as the modified linear diene polymers obtained in Production Examples were measured and calculated by the following methods.

(Methods for measuring Mn, Mw and Mw/Mn)

The Mn, Mw and Mw/Mn of the modified linear diene polymers and the unmodified linear diene polymer obtained in Production Examples were measured by GPC (gel permeation chromatography) relative to standard polystyrenes. The measurement involved the following apparatus and conditions.

- Apparatus: GPC apparatus "GPC 8020" manufactured by TOSOH CORPORATION
- Separation column: "TSKgel G4000HXL" manufactured by TOSOH CORPORATION
- Detector: "RI-8020" manufactured by TOSOH CORPORATION
- Eluent: Tetrahydrofuran
- Eluent flow rate: 1.0 mL/min
- Sample concentration: 5 mg/10 mL

· Column temperature: 40°C

(Vinyl content)

The vinyl content in the modified linear diene polymer (A) or the unmodified linear diene polymer (A') was measured with $^{1}$H-NMR (500 MHz) manufactured by JEOL Ltd. The concentration was sample/deuterated chloroform = 50 mg/1 mL. The number of scans was 1024. With respect to the spectrum obtained, the vinyl content was calculated from the ratio of the area of the double-bond peak assigned to the vinylated diene compound to the area of the double-bond peak assigned to the non-vinylated diene compound.

(Glass transition temperature)

A 10 mg portion of the modified linear diene polymer (A) or the unmodified linear diene polymer (A') was placed into an aluminum pan and was analyzed by differential scanning calorimetry (DSC) at a heat-up rate of 10°C/min. With respect to the thermogram obtained, the peak top value of the DDSC curve was adopted as the glass transition temperature.

(Method for measuring melt viscosity at 38°C)

The melt viscosity of the modified linear diene polymer (A) or the unmodified linear diene polymer (A') at 38°C was measured with a Brookfield viscometer (manufactured by BROOKFIELD ENGINEERING LABS. INC.).

(Method for measuring average number of functional groups per molecule)

The average numbers of functional groups per molecule of the modified linear diene polymers (A-1), (A-2) and ($\alpha$-1) were measured with $^{1}$H-NMR (500 MHz) manufactured by JEOL Ltd. The concentration was sample/deuterated chloroform = 50 mg/1 mL. The number of scans was 1024. With respect to the spectrum obtained, the average number of functional groups per molecule was calculated from the ratio of the area of the peak assigned to the urethane bonds to the area of the peak assigned to the polymerization initiator.

The average number of functional groups per molecule of the graft-modified linear diene polymer ($\alpha$-2) may be calculated from the functional group equivalent weight (g/eq) and the styrene-equivalent number average molecular weight Mn of the graft-modified linear diene polymer ($\alpha$-2).

(Average number of functional groups per molecule) = [(Number average molecular weight Mn)/(Molecular weight of styrene unit) × (Average molecular weight of units of conjugated diene and optional monomers other than conjugated dienes)]/(Functional group equivalent weight)

The functional group equivalent weight of the graft-modified linear diene polymer ($\alpha$-2) indicates the mass of butadiene and optional monomers other than butadiene that are bonded together per one functional group. The functional group equivalent weight may be calculated from the ratio of the area of the peak assigned to the functional groups to the area of the peak assigned to the polymer main chains using $^{1}$H-NMR or $^{13}$C-NMR. The peak assigned to the functional groups is a peak assigned to alkoxy groups.

Table 1 below describes the properties of the modified linear diene polymers (A-1), (A-2), ($\alpha$-1) and ($\alpha$-2) obtained in Production Examples 1 to 3 and 5, and the unmodified linear diene polymer (A'-1) obtained in Production Example 4.

[Table 1]

| | Weight average molecular weight ($\times 10^3$) | Molecular weight distribution Mw/Mn | Vinyl content (mol%) | Glass transition temperature (°C) | Melt viscosity (38°C) (Pa·s) | Average number of functional groups per molecule (groups) | Position of functional groups |
|---|---|---|---|---|---|---|---|
| Modified linear liquid diene polymer (A-1) | 5.4 | 1.05 | 65 | -50 | 3 | 0.97 | Terminal |
| Modified linear liquid diene polymer (A-2) | 5.7 | 1.05 | 65 | -50 | 8 | 0.86 | Terminal |
| Modified linear liquid diene polymer (α-1) | 6.0 | 1.08 | 65 | -50 | 19 | 0.75 | Terminal |
| Modified linear liquid diene polymer (α-2) | 5.5 | 1.06 | 65 | -50 | 5 | 0.95 | Random |
| Unmodified linear diene polymer (A'-1) | 5.5 | 1.05 | 65 | -49 | 6 | 0 | Absent |

Examples 1 to 3 and Comparative Examples 1 to 6

The modified linear diene polymer (A), the modified linear diene polymer (α), the unmodified linear diene polymer (A'), the solid rubbers (B), the filler (C), TDAE, the silane coupling agent, zinc oxide, stearic acid, the wax and the antioxidant were added in the amounts (parts by mass) described in Tables 2 and 3 into an internal Banbury mixer and were kneaded together for 6 minutes from a start temperature of 60°C to a resin temperature of 150°C. Thereafter, the kneaded mixture was removed from the mixer and was cooled to room temperature. Next, the mixture was placed into the Banbury mixer again and was kneaded for 4 minutes from a start temperature of 90°C to a resin temperature of 150°C. Thereafter, the kneaded mixture was removed from the mixer and was cooled to room temperature. Further, the mixture was placed into the Banbury mixer again, and the vulcanizing agent (sulfur) and the vulcanization accelerators were added. The resultant mixture was kneaded for 75 seconds from a start temperature of 50°C to a maximum temperature of 100°C. A rubber composition was thus obtained.

The rubber composition obtained was subjected to press forming (160°C, 30 to 50 minutes) to give a vulcanized rubber sheet (2 mm in thickness) . The sheet was tested by the methods described below to evaluate the rolling resistance performance and the breaking energy. The results are described in Tables 2 and 3.

The measurement methods for the above evaluations are described below.

(Rolling resistance performance)

The sheets of the rubber compositions prepared in Examples and Comparative Examples were cut to give test pieces 40 mm in length and 5 mm in width. The test pieces were tested on a dynamic viscoelastometer manufactured by GABO GmbH at a measurement temperature of 60°C, a frequency of 10 Hz, a static strain of 10% and a dynamic

strain of 2% to determine tanδ as an index of rolling resistance performance. The data obtained in Examples and Comparative Examples are values relative to the value of Comparative Example 4 in Table 2 and that of Comparative Example 6 in Table 3 taken as 100. The smaller the value, the more excellent the rolling resistance performance of the rubber composition.

(Breaking energy)

The sheets of the rubber compositions prepared in Examples and Comparative Examples were each punched to give a JIS-3 dumbbell test piece. The test piece was subjected to a tensile test (stress rate: 500 mm/min) on a tensile tester manufactured by INSTRON in accordance with JIS K 6251, thereby recording a stress-strain curve. The integral of the stress-strain curve to the occurrence of breakage was determined as the tensile breaking energy. The data obtained in Examples and Comparative Examples are values relative to the value of Comparative Example 4 in Table 2 and that of Comparative Example 6 in Table 3 taken as 100. The larger the value, the more excellent the strength of the composition.

[Table 2]

| | | | Examples | | Comparative Examples | | | |
|---|---|---|---|---|---|---|---|---|
| | | | 1 | 2 | 1 | 2 | 3 | 4 |
| Amounts (parts by mass) | Components (A) | Modified liquid diene rubber (A-1) | 6 | | | | | |
| | | Modified liquid diene rubber (A-2) | | 6 | | | | |
| | | Modified liquid diene rubber (α-1) | | | 6 | | | |
| | | Modified liquid diene rubber (α-2) | | | | 6 | | |
| | | Liquid diene rubber (A'-1) | | | | | 6 | |
| | Components (B) | Solution-polymerized styrene butadiene rubber | 80 | 80 | 80 | 80 | 80 | 80 |
| | | Butadiene rubber | 20 | 20 | 20 | 20 | 20 | 20 |
| | Component (C) | Silica | 100 | 100 | 100 | 100 | 100 | 100 |
| | Optional components | TDAE | 29 | 29 | 29 | 29 | 29 | 35 |
| | | Silane coupling agent | 8 | 8 | 8 | 8 | 8 | 8 |
| | | Zinc oxide | 3 | 3 | 3 | 3 | 3 | 3 |
| | | Stearic acid | 2.5 | 2.5 | 2.5 | 2.5 | 2.5 | 2.5 |
| | | Wax | 2.0 | 2.0 | 2.0 | 2.0 | 2.0 | 2.0 |
| | | Antioxidant | 2.5 | 2.5 | 2.5 | 2.5 | 2.5 | 2.5 |
| | | Sulfur | 1.5 | 1.5 | 1.5 | 1.5 | 1.5 | 1.5 |
| | | Vulcanization accelerator (1) | 0.5 | 0.5 | 0.5 | 0.5 | 0.5 | 0.5 |
| | | Vulcanization accelerator (2) | 0.35 | 0.35 | 0.35 | 0.35 | 0.35 | 0.35 |
| | | Vulcanization accelerator (3) | 1.5 | 1.5 | 1.5 | 1.5 | 1.5 | 1.5 |
| | Rolling resistance performance (tanδ at 60°C) (relative value) | | 93 | 94 | 95 | 98 | 101 | 100 |
| | Breaking energy (relative value) | | 121 | 121 | 120 | 122 | 119 | 100 |

[Table 3]

| | | | Example | Comparative Examples | |
|---|---|---|---|---|---|
| | | | 3 | 5 | 6 |
| Amounts (parts by mass) | Components (A) | Modified liquid diene rubber (A-1) | 12 | | |
| | | Liquid diene rubber (A'-1) | | 12 | |
| | Components (B) | Solution-polymerized styrene butadiene rubber | 80 | 80 | 80 |
| | | Butadiene rubber | 20 | 20 | 20 |
| | Component (C) | Silica | 100 | 100 | 100 |
| | Optional components | TDAE | 23 | 23 | 35 |
| | | Silane coupling agent | 8 | 8 | 8 |
| | | Zinc oxide | 3 | 3 | 3 |
| | | Stearic acid | 2.5 | 2.5 | 2.5 |
| | | Wax | 2.0 | 2.0 | 2.0 |
| | | Antioxidant | 2.5 | 2.5 | 2.5 |
| | | Sulfur | 1.5 | 1.5 | 1.5 |
| | | Vulcanization accelerator (1) | 0.5 | 0.5 | 0.5 |
| | | Vulcanization accelerator (2) | 0.35 | 0.35 | 0.35 |
| | | Vulcanization accelerator (3) | 1.5 | 1.5 | 1.5 |
| | Rolling resistance performance (tanδ at 60°C) (relative value) | | 93 | 111 | 100 |
| | Breaking energy (relative value) | | 121 | 119 | 100 |

INDUSTRIAL APPLICABILITY

The modified linear diene polymers (A) obtained in the present invention, when added to rubber compositions including components such as a solid rubber and a filler, offer excellent workability and allow the rubber compositions to give crosslinked products which attain enhanced properties by virtue of the filler being dispersed in an ideal state. Thus, the materials are useful in various industrial products, daily necessities, tires and the like.

## Claims

**1.** A modified linear diene polymer having a functional group of the following formula (1) only at one end thereof, the average number of the functional groups per molecule being 0.8 to 1,

[Chem. 1]

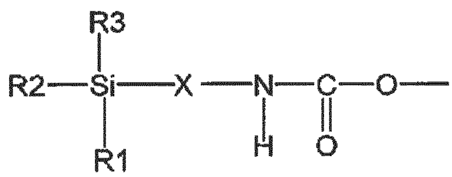

(1)

wherein R1, R2 and R3 are each independently a methoxy group, an ethoxy group, a phenoxy group, a methyl group, an ethyl group or a phenyl group, at least one of R1, R2 and R3 is a methoxy group, an ethoxy group

or a phenoxy group, and X is a divalent alkylene group having 1 to 6 carbon atoms,
wherein a raw material for the linear modified diene polymer is an unmodified linear diene polymer containing monomer units derived from butadiene and/or isoprene,
wherein the total content of butadiene and/or isoprene units in the unmodified linear diene polymer is 60 to 100 mass% relative to all the monomer units constituting the unmodified linear diene polymer, and wherein the modified linear diene polymer is obtained by introducing a functional group of the formula (1) at only one of the ends of the unmodified linear diene polymer.

**2.** The modified linear diene polymer according to Claim 1, which has a ratio (Mw/Mn) of weight average molecular weight (Mw) to number average molecular weight (Mn) of 1.0 to 2.0.

**3.** A method for producing a modified linear diene polymer described in Claim 1 or 2, comprising:

a step (I) of polymerizing a monomer comprising a conjugated diene comprising butadiene and/or isoprene in the presence of an organic solvent using a monofunctional anionic polymerization initiator to prepare an unmodified linear diene polymer containing monomer units derived from butadiene and/or isoprene, wherein the total content of butadiene and/or isoprene units in the unmodified linear diene polymer is 60 to 100 mass% relative to all the monomer units constituting the unmodified linear diene polymer, and terminating the polymerization reaction with an epoxy group-containing compound, thereby preparing a solution including a hydroxyl-modified linear diene polymer having a hydroxyl group only at one end thereof,
a step (II) of removing a catalyst residue derived from the monofunctional anionic polymerization initiator from the solution including the hydroxyl-modified linear diene polymer,
a step (III) of removing the organic solvent from the solution including the hydroxyl-modified linear diene polymer resulting from the step (II), and
a step (IV) of reacting the hydroxyl-modified linear diene polymer with a silane compound represented by the following formula (1'),

[Chem. 2]

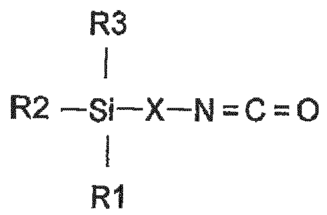

(1')

wherein R1, R2 and R3 are each independently a methoxy group, an ethoxy group, a phenoxy group, a methyl group, an ethyl group or a phenyl group, at least one of R1, R2 and R3 is a methoxy group, an ethoxy group or a phenoxy group, and X is a divalent alkylene group having 1 to 6 carbon atoms.

**4.** The method according to Claim 3 for producing a modified linear diene polymer, wherein the monofunctional anionic polymerization initiator is an alkylmonolithium.

**Patentansprüche**

**1.** Modifiziertes lineares Dienpolymer mit einer funktionellen Gruppe der folgenden Formel (1) nur an einem Ende davon, wobei die durchschnittliche Anzahl der funktionellen Gruppen pro Molekül 0,8 bis 1 beträgt,

[Chem. 1]

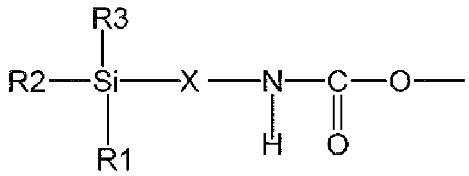

(1)

wobei R1, R2 und R3 jeweils unabhängig voneinander eine Methoxygruppe, eine Ethoxygruppe, eine Phenoxygruppe, eine Methylgruppe, eine Ethylgruppe oder eine Phenylgruppe sind, wobei mindestens eines von R1, R2 und R3 eine Methoxygruppe, eine Ethoxygruppe oder eine Phenoxygruppe ist und X eine zweiwertige Alkylengruppe mit 1 bis 6 Kohlenstoffatomen ist,
wobei ein Rohmaterial für das lineare modifizierte Dienpolymer ein unmodifiziertes lineares Dienpolymer ist, das von Butadien und/oder Isopren abgeleitete Monomereinheiten enthält,
wobei der Gesamtgehalt an Butadien- und/oder Isopreneinheiten in dem unmodifizierten linearen Dienpolymer 60 bis 100 Massen-%, bezogen auf alle Monomereinheiten, die das unmodifizierte lineare Dienpolymer bilden, beträgt, und wobei das modifizierte lineare Dienpolymer durch Einführen einer funktionellen Gruppe der Formel (1) an nur einem der Enden des unmodifizierten linearen Dienpolymers erhalten wird.

**2.** Modifiziertes lineares Dienpolymer nach Anspruch 1, das ein Verhältnis (Mw/Mn) von gewichtsmittlerem Molekulargewicht (Mw) zu zahlenmittlerem Molekulargewicht (Mn) von 1,0 bis 2,0 aufweist.

**3.** Verfahren zur Herstellung eines modifizierten linearen Dienpolymers nach Anspruch 1, umfassend:

einen Schritt (I) des Polymerisierens eines Monomers, umfassend ein konjugiertes Dien, umfassend Butadien und/oder Isopren, in Gegenwart eines organischen Lösungsmittels unter Verwendung eines monofunktionellen anionischen Polymerisationsinitiators, um ein unmodifiziertes lineares Dienpolymer, enthaltend von Butadien und/oder Isopren abgeleitete Monomereinheiten, herzustellen, wobei der Gesamtgehalt an Butadien- und/oder Isopreneinheiten in dem unmodifizierten linearen Dienpolymer 60 bis 100 Massen-%, bezogen auf alle Monomereinheiten, die das unmodifizierte lineare Dienpolymer bilden, beträgt, und des Beendens der Polymerisationsreaktion mit einer Epoxygruppe-enthaltenden Verbindung, wodurch eine Lösung, enthaltend ein hydroxylmodifiziertes lineares Dienpolymer mit einer Hydroxylgruppe nur an einem Ende davon, hergestellt wird,
einen Schritt (II) des Entfernens eines Katalysatorrestes, der von dem monofunktionellen anionischen Polymerisationsinitiator stammt, aus der das hydroxylmodifizierte lineare Dienpolymer enthaltenden Lösung,
einen Schritt (III) des Entfernens des organischen Lösungsmittels aus der das hydroxylmodifizierte lineare Dienpolymer aus der Stufe (II) enthaltenden Lösung, und
einen Schritt (IV) des Umsetzens des hydroxylmodifizierten linearen Dienpolymers mit einer Silanverbindung, die durch die folgende Formel (1') dargestellt wird,

[Chem. 2]

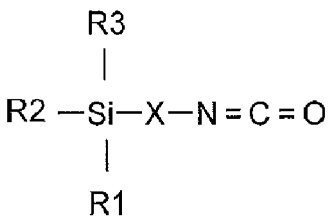

(1')

wobei R1, R2 und R3 jeweils unabhängig voneinander eine Methoxygruppe, eine Ethoxygruppe, eine Phenoxygruppe, eine Methylgruppe, eine Ethylgruppe oder eine Phenylgruppe sind, wobei mindestens eines von R1, R2 und R3 eine Methoxygruppe, eine Ethoxygruppe oder eine Phenoxygruppe ist und X eine zweiwertige

Alkylengruppe mit 1 bis 6 Kohlenstoffatomen ist.

4. Verfahren nach Anspruch 3 zur Herstellung eines modifizierten linearen Dienpolymers, wobei der monofunktionelle anionische Polymerisationsinitiator ein Alkylmonolithium ist.

## Revendications

1. Polymère de diène linéaire modifié ayant un groupe fonctionnel de la formule suivante (1) uniquement à une extrémité de celui-ci, le nombre moyen des groupes fonctionnels par molécule étant de 0,8 à 1,

[Chim. 1]

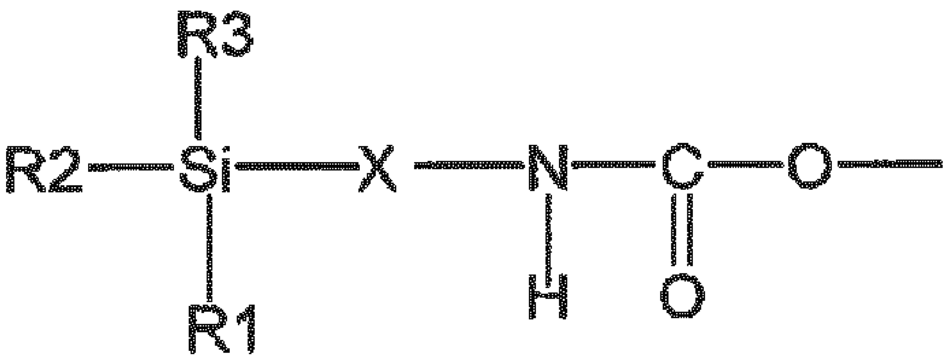

(1)

dans laquelle R1, R2 et R3 sont chacun indépendamment un groupe méthoxy, un groupe éthoxy, un groupe phénoxy, un groupe méthyle, un groupe éthyle ou un groupe phényle, au moins un de R1, R2 et R3 est un groupe méthoxy, un groupe éthoxy ou un groupe phénoxy, et X est un groupe alkylène divalent ayant 1 à 6 atomes de carbone,
dans lequel une matière première pour le polymère de diène linéaire modifié est un polymère de diène linéaire non modifié contenant des unités monomères dérivées de butadiène et/ou d'isoprène,
dans lequel la teneur totale en unités de butadiène et/ou d'isoprène dans le polymère de diène linéaire non modifié est de 60 à 100 % en masse par rapport à l'ensemble des unités monomères constituant le polymère de diène linéaire non modifié, et dans lequel le polymère de diène linéaire modifié est obtenu en introduisant un groupe fonctionnel de la formule (1) à uniquement une des extrémités du polymère de diène linéaire non modifié,

2. Polymère de diène linéaire modifié selon la revendication 1, qui a un rapport (Mw/Mn) de poids moléculaire moyen en poids (Mw) sur poids moléculaire moyen en nombre (Mn) de 1,0 à 2,0.

3. Procédé de production d'un polymère de diène linéaire modifié décrit dans la revendication 1 ou 2, comprenant :

une étape (I) de polymérisation d'un monomère comprenant un diène conjugué comprenant du butadiène et/ou de l'isoprène en présence d'un solvant organique en utilisant un initiateur de polymérisation anionique monofonctionnel pour préparer un polymère de diène linéaire non modifié contenant des unités monomères dérivées de butadiène et/ou d'isoprène, dans lequel la teneur totale en unités de butadiène et/ou d'isoprène dans le polymère de diène linéaire non modifié est de 60 à 100 % en masse par rapport à l'ensemble des unités monomères constituant le polymère de diène linéaire non modifié, et de terminaison de la réaction de polymérisation avec un composé contenant un groupe époxy, préparant de ce fait une solution incluant un polymère de diène linéaire modifié par un hydroxyle ayant un groupe hydroxyle uniquement à une extrémité de celui-ci,
une étape (II) d'élimination d'un résidu de catalyseur dérivé de l'initiateur de polymérisation anionique monofonctionnel de la solution incluant le polymère de diène linéaire modifié par un hydroxyle,
une étape (III) d'élimination du solvant organique de la solution incluant le polymère de diène linéaire modifié par un hydroxyle résultant de l'étape (II), et une étape (IV) de réaction du polymère de diène linéaire modifié par un hydroxyle avec un composé de silane représenté par la formule suivante (1'),

[Chim. 2]

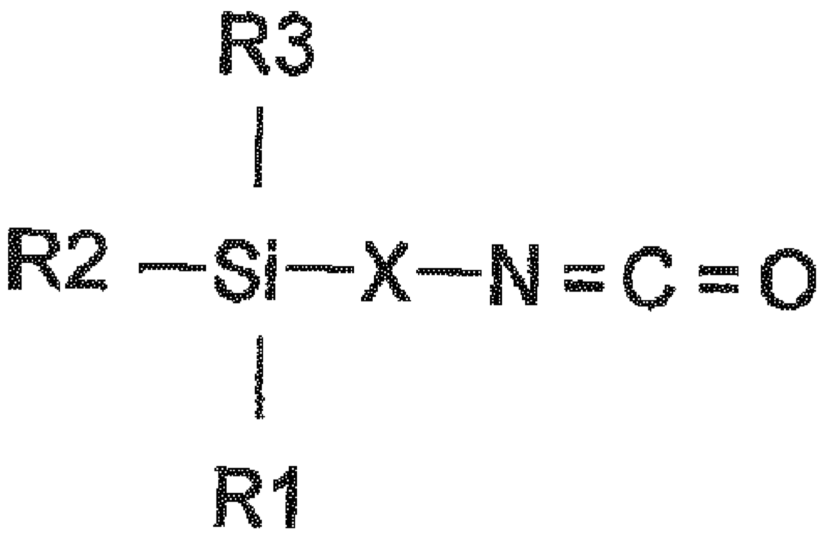

(1')

dans laquelle R1, R2 et R3 sont chacun indépendamment un groupe méthoxy, un groupe éthoxy, un groupe phénoxy, un groupe méthyle, un groupe éthyle ou un groupe phényle, au moins un de R1, R2 et R3 est un groupe méthoxy, un groupe éthoxy ou un groupe phénoxy, et X est un groupe alkylène divalent ayant 1 à 6 atomes de carbone,

**4.** Procédé selon la revendication 3 de production d'un polymère de diène linéaire modifié, dans lequel l'initiateur de polymérisation anionique monofonctionnel est un alkylmonolithium.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016180649 A1
- JP 2000344949 A
- JP 2013249359 A
- JP 2011132298 A